Europäisches Patentamt

European Patent Office

Office européen des brevets

(19)

(11) **EP 0 877 220 A2**

(12) **EUROPÄISCHE PATENTANMELDUNG**

(43) Veröffentlichungstag:
11.11.1998 Patentblatt 1998/46

(51) Int. Cl.⁶: **F26B 21/02**, F26B 15/16

(21) Anmeldenummer: 98108270.4

(22) Anmeldetag: 06.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 06.05.1997 DE 19719183
26.01.1998 DE 19802856

(71) Anmelder:
Hans Lingl Anlagenbau und
Verfahrenstechnik GmbH & Co. KG
D-89231 Neu-Ulm (DE)

(72) Erfinder:
• Lingl, Hans
89231 Neu-Ulm (DE)
• Schmid, Alfred
86830 Schwabmünchen (DE)
• Brugger, Karl
89165 Dieterheim (DE)

(74) Vertreter:
Körber, Wolfhart, Dr. rer.nat. et al
Patentanwälte
Mitscherlich & Partner,
Sonnenstrasse 33
80331 München (DE)

(54) **Vorrichtung und Verfahren zum Trocknen von Keramikformlingen**

(57)     Die vorliegende Erfindung betrifft eine Vorrichtung und ein Verfahren zum Trocknen von Keramikformlingen. Bei dem erfindungsgemäßen Verfahren zum Trocknen von Keramikformlingen werden Keramikformlinge getrocknet, die auf zwei parallelen Kolonnen von Trockenwägen angeordnet sind, wobei die folgenden Schritte durchgeführt werden: Durchströmen von Trokkenluft durch einen Hauptluftkanal 5 zwischen den beiden Kolonnen von Trockenwägen 3, Ansaugen von Trockenluftteilen aus dem Hauptluftkanal 5 quer durch einen jeweiligen Trockenwagen 3, und Zurückleiten der Trockenluftteile quer durch den jeweils stromabwärts angeordneten Trockenwagen 3 in den Hauptluftkanal 5, wobei das Ansaugen und das Zurückleiten der Trockenluftteile in Trockenabschnitten 9 erfolgt, die auf den dem Hauptluftkanal 5 abgewandten Seiten der Kolonnen von Trockenwägen 3 angeordnet sind. Die erfindungsgemäße Vorrichtung zum Trocknen von Keramikformlingen umfaßt zwei parallele Trockenkanäle 9 zum Durchfördern von mit zu trocknenden Keramikformlingen beladenen Trockenwägen 3 in einer Längsrichtung L, einem zwischen den beiden Trockenkanälen 2 angeordneten Hauptluftkanal 5 zum Durchströmen von Trokkenluft, und Trockenabschnitte 9, die auf den von dem Hauptluftkanal 5 abgewandten Seiten der Trockenkanäle 2 angeordnet sind, wobei jeder Trockenabschnitt 9 eine Ventilatoreinrichtung 7 umfaßt, die einen Trockenluftteil quer durch den jeweiligen Trockenkanal 2 aus dem Hauptluftkanal 5 ansaugt und den Trockenluftanteil quer durch den Trockenkanal 2 stromabwärts in den Hauptluftkanal zurückleitet.

Fig. 1

**Beschreibung**

Die vorliegende Erfindung betrifft eine Vorrichtung und ein Verfahren zum Trocknen von Keramikformlingen.

Keramikformlinge werden zum Trocknen mit konditionierter Trockenluft umspült, wobei die Trockenluft den Keramikformling unterschiedlich anströmen kann. Ziel ist es, einen möglichst großen Teil der äußeren und inneren Oberfläche der Keramikformlinge mit Trockenluft zu bestreichen und abgeleitet von der Wärmeübergangsformel $\Delta Q = \alpha \times \Delta T \times a$ (wobei $\Delta Q$ der Wärmeübergang, $\alpha$ die Wärmeleitungskonstante, $\Delta T$ die Temperaturdifferenz und a die Fläche ist) einen möglichst optimalen Wärmeübergang und damit auch Stoffübergang in jedem Abschnitt der Vorrichtung zum Trocknen der Keramikformlinge zu erreichen.

Aus der US-PS 1268535 sind Trockner bekannt, die als Kammern ausgebildet und durch Zwischenwände in mehrere Trockenzonen gegliedert sind. Die Trockenzonen werden von Trockenwagen durchfahren, auf denen zu trocknendes Gut angeordnet ist. Die Transportwagen sind dabei stirnseitig abgeschottet. Die Trockenluft wird durch die Transportwagen hindurchgeblasen und von Kammer zu Kammer in einer Schlangenlinie geführt. Aus der deutschen Patentschrift 3 941 134 C2 ist ein Trockner bekannt, bei dem die Trockenluft etagenweise und in einer Mäanderform durch die in der Höhe mehrfach unterteilten Trockenzonen und Trockengestelle geführt wird, wobei sie in die jeweils benachbarte Trockenzone seitlich übertritt und dort wieder etagenweise und mäanderförmig weitergeführt wird.

Nachteilig ist bei diesen bekannten Trocknern, daß der Gesamt-Trockenluftstrom über das Trockengut geführt wird, so daß als einzige Einflußgröße für die Steuerung der Trockengeschwindigkeit die Beeinflussung durch die Lufttemperatur verbleibt. Außerdem wird aus diesem Grund der Luftwiderstand der gesamten Anlage sehr groß, wodurch ein hoher Energieaufwand für die Führung des Gesamt-Trockenluftstromes notwendig ist.

Aus der deutschen Offenlegungsschrift 195 27 415 A1 ist ein Trockner bekannt, bei dem Formlinge in Trockengestellen von der Luftströmung auf der gesamten Seitenfläche des Formlingsbesatzes in einer über diese Besatzfläche im wesentlichen gleichmäßigen Druckverteilung angeströmt werden, wobei der Formlingsbesatz außen an den Rändern vom Trockengestell eng umschlossen wird. Nachteilig bei diesem System ist, daß die Trockenluft quer zur Haupt-Luftstromrichtung umgewälzt wird, was wiederum einen sehr hohen Kraft- und Energieaufwand erfordert.

Aus der deutschen Offenlegungsschrift 195 33 667 A 1 ist ein Tunneltrockner für Keramikformlinge bekannt, bei dem zueinander versetzt Luftumwälznischen in den Seitenwänden des Trockners ausgebildet sind, durch die über zusammenhängende trockenraumhohe Lufteintrittsöffnungen aus dem Trockenluft-Hauptstrom ein Teilluftstrom abgezweigt wird. Der abgezweigte Teilluftstrom wird über eine einzige zusammenhängende Austrittsöffnung stromaufwärts wieder in den Trockerluft-Hauptstrom eingespeist, so daß eine tunnelinterne horizontale Umwälzung im Bereich einer Teilbreite des Trockentunnels entsteht.

Nachteilig bei dieser Vorrichtung ist zum einen die unkontrollierte Luftverteilung im Trockenkanal, die nicht sicherstellt, daß die Oberflächen der einzelnen Formlinge optimal mit Trockenluft bestrichen werden, zum andern, daß die Umwälzung der Trockenluft gegen den Hauptluftstrom einen großen Kraft- und Energiebedarf erfordert.

Aus der europäischen Patentanmeldung EP 0 674 146 A1 ist eine Vorrichtung zum Trocknen von keramischem Gut bekannt, bei der die zu trocknenden Formlinge in einen Trockenwagen, der längs seines Umfanges kastenartig geschlossen ist, auf einen Rost gesetzt werden, und zwar dergestalt, daß die Locher der Ziegel vertikal orientiert sind und daß die Trockenluft senkrecht durch die Transportwägen gezogen wird. Die Trockenluft kann dabei im Kreislauf durch die Transportwägen gezogen werden, wobei die Kreisläufe bildenden Einheiten aus zwei Transportwagenlängen durch Kanäle miteinander verbunden sind. In einer anderen Variante bilden die Transportwägen Einheiten, die mäanderförmig von der Trockenluft durchströmt werden.

Bei dieser Vorrichtung ist zwar eine optimale Durchströmung der Formlinge ermöglicht, wobei jedoch nachteilig ist, daß eine Umwälzung wie auch eine mäanderförmige Führung des Gesamtluftstromes einen hohen Kraft- und Energiebedarf erfordert und daß die Trockengeschwindigkeit in den einzelnen Zonen schlecht zu regeln ist.

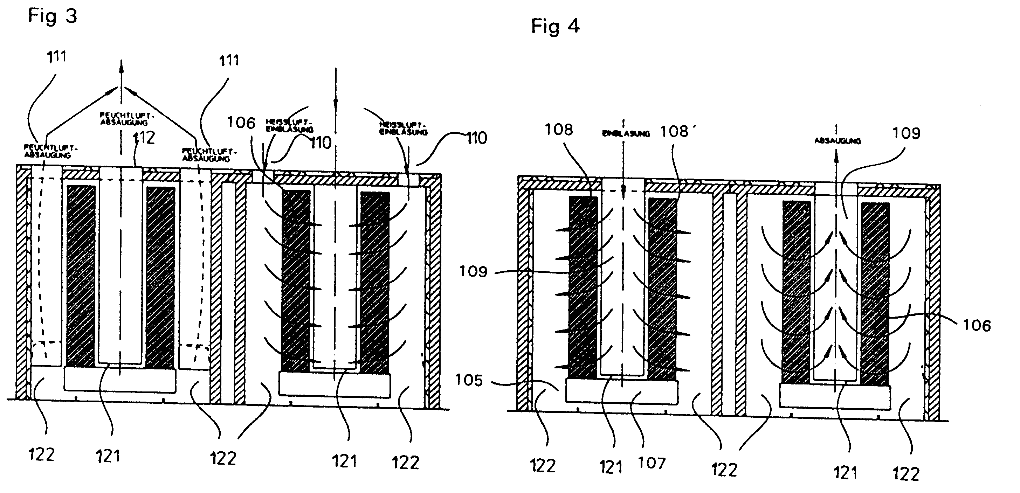

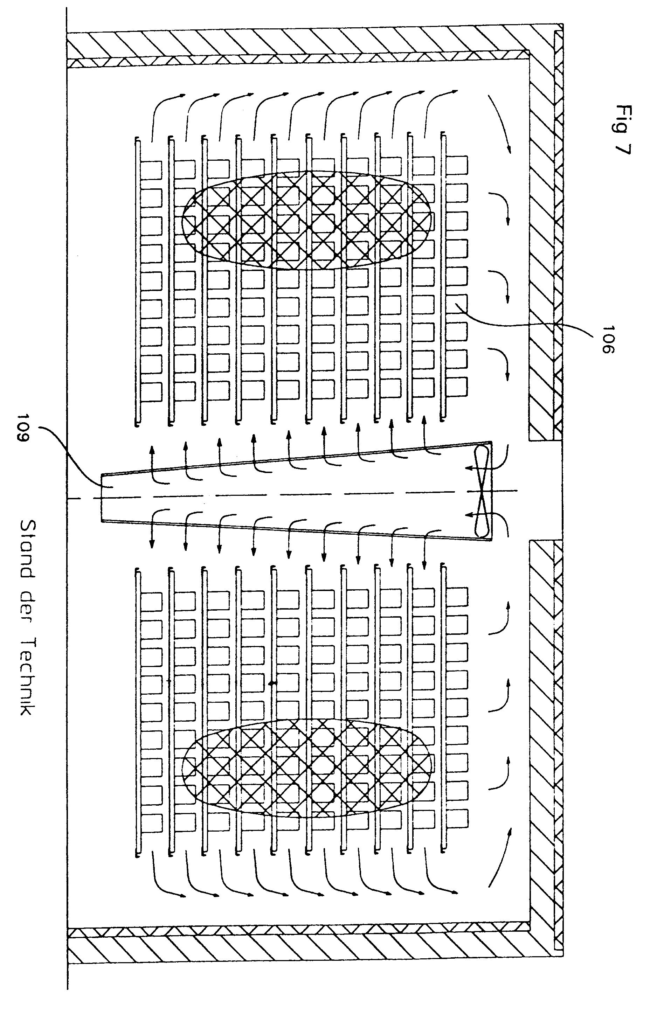

Aus der LINGL-Broschüre "Trockentechnik" P134/2/7.93 von 1993, vordere Umschlagseite oben und Abbildung 4, ist ein Trockner ersichtlich, der mit großräumigen Trockenwagen beschickt wird, die auf zwei Gleisen durch den Trockner laufen, zwischen denen in Längsrichtung hintereinander Drehlüfter angeordnet sind. Ein derartiger Trockner ist auch in Figur 7 schematisch dargestellt. Von den Drehlüftern strömt die Trockenluft senkrecht zur Förderrichtung der Trocknerwagen durch den Formlingsbesatz und strömt an der Außenseite und Decke wieder zurück. Nachteilig bei diesem Trockner ist, daß die Ziegel in der Mitte des Besatzes, insbesondere in einem größeren Abstand von dem Drehlüfter (schraffiert dargestellter Bereich) nicht die gleichen Trockenverhältnisse erfahren wie die Ziegel am Rande des Besatzes, sondern eine längere Trockenzeit erfordern. Daraus resultiert eine insgesamt längere Trockenzeit und mögliche Qualitätseinbußen der Ziegel.

Der vorliegenden Erfindung liegt somit die Aufgabe zugrunde, eine Vorrichtung und ein Verfahren zum Trocknen von Keramikformlingen bereitzustellen, die einen geringen Energiebedarf zur optimalen Beaufschlagung der Formlinge mit Trockenluft erfordern.

Diese Aufgabe wird durch eine Vorrichtung zum Trocknen von Keramikformlingen gemäß den beigefügten Ansprüchen 1 bzw. 9 und ein Verfahren zum Trocknen von Keramikformlingen gemäß den beigefügten Ansprüchen 8 bzw. 23 gelöst.

Vorteilhafte Ausgestaltungen der vorliegenden Erfindung sind in den Unteransprüchen angegeben.

Der Vorteil der erfindungsgemäßen Vorrichtung und des erfindungsgemäßen Verfahrens zum Trocknen von Keramikformlingen ist dabei, daß die Keramikformlinge derart angeströmt werden, daß ihre inneren und äußeren Oberflächen in maximaler Weise mit Trockenluft angeströmt werden und daß gleichzeitig der Energiebedarf gering ist, da nicht die Gesamt-Luftmenge über die Keramikformlinge gezogen wird, sondern jeweils ein Teil der Trockenluft, also eine reduzierte Luftmenge. Weiterhin wird die Trockenluft nicht umgewälzt, sondern sie wird in Richtung des Hauptluftstromes in dem Hauptluftkanal in regelbaren Schleifen geführt, wodurch der Energiebedarf weiter verringert ist. Gemäß einer in den Unteransprüchen beanspruchten bevorzugten Ausgestaltung der vorliegenden Erfindung kann die Trockenluft temperaturgeregelt werden. In einer weiteren Ausgestaltung der vorliegenden Erfindung kann die Geschwindigkeit der Trockenluftteile verändert werden, wodurch der Wärmeübergang bzw. der Stoffübergang an den Oberflächen der Keramikformlinge je nach den Erfordernissen flexibel eingestellt werden kann.

Bei der durch Anspruch 9 definierten erfindungsgemäßen Trockenvorrichtung werden die zu trocknenden Formlinge in zwei voneinander beabstandeten Reihen durch den Trockenkanal gefördert und bilden so einen mittleren sowie zwei äußere Luftkanäle. Durch eine Ventilationseinrichtung wird die Trockenluft entgegen der Förderrichtung der Keramikformlinge durch den Trockenkanal geleitet, wobei ein Teil der Trockenluft nacheinander abwechselnd die Keramikformlingsreihen von dem mittleren Luftkanal zum äußeren Luftkanal und umgekehrt durchströmt. Die Trockenluft wird dabei jeweils mittels eines Ventilators in den mittleren Luftkanal eingeblasen und im benachbarten Trockenabschnitt aus dem mittleren Luftkanal wieder abgesaugt.

Die definierte Trockenluftführung senkrecht zur Förderrichtung der Formlinge von dem mittleren Luftkanal zum äußeren Luftkanal und umgekehrt ermöglicht so ebenfalls eine gleichmäßige Trocknung aller Keramikformlinge. Die insgesamt drei Luftkanäle und die mittige Absaugung und Einblasung der Trockenluft ermöglichen diese vorteilhafte Trockenluftführung jedoch mit einer minimalen Anzahl von Ventilatoren, da ein einziger Ventilator je Trockenabschnitt zur Erzeugung einer vom mittleren Kanal nach außen oder von den äußeren Kanälen nach innen gerichteten Luftströmung durch den Formlingsbesatz hindurch ausreicht.

Vorzugsweise liegen die Keramikformlinge auf Trockenwagen mit jeweils zwei voneinander beabstandeten Trockengerüsten auf, wobei die Trockengerüste der aufeinanderfolgenden Trocknerwagen eine Formlingsreihe ergeben. Vorzugsweise haben diese Formlingsreihen eine Breite von höchstens zwei Formlingen, so daß eine gleichmäßige und schnelle Trocknung sichergestellt ist.

Bei einem bevorzugten Ausführungsbeispiel der vorliegenden Erfindung ist der Trockenkanal U-förmig mit einem Vorlaufkanal und einem Rücklaufkanal ausgebildet, so daß Einfahrseite und Ausfahrseite für die Trocknerwagen nebeneinander liegen. Dies ermöglicht eine schnelle und einfache Beschickung und Entnahme der Ziegelformlinge. Vorzugsweise ist zu diesem Zweck eine Lade-/Entladevorrichtung vorgesehen, die beidseitig angeordnete Rechen zum Aufgreifen, Transportieren und Absetzen der zu trocknenden bzw. getrockneten Formlinge vorgesehen.

Der U-förmige Trockenkanal weist vorzugsweise eine Umsetzbühne zum Umsetzen der Trocknerwagen von dem Vorlaufkanal in den Rücklaufkanal auf. Dabei wird die Umsetzbühne selbst zur Verringerung des Energieverbrauches nicht von der Trockenluft durchströmt.

Gemäß einem bevorzugten Ausführungsbeispiel der Erfindung sind an der Einfahrseite des Trockenkanals eine mittlere Trockenluftabsaugung zum Absaugen von Trockenluft aus dem mittleren Luftkanal sowie seitliche Trockenluftabsaugungen zum Absaugen der Trockenluft aus den seitlichen Luftkanälen angeordnet. Der Luftdurchsatz dieser Absaugungen ist einzeln regelbar, so daß die Luftverteilung im Querschnitt des Trockenkanals, insbesondere an dessen Einfahrseite regulierbar ist.

An der Ausfahrseite des Trockenkanals sind Heißlufteinspeisungen zum Einspeisen der Trockenluft in die seitlichen Luftkanäle vorgesehen.

Zur Erzeugung der Trockenluftströmung durch den Formlingsbesatz quer zu der Vortriebsrichtung der Trocknerwagen sind vorzugsweise oberhalb des Trocknerkanals angeordnete Ventilatoren vorgesehen, die die Trockenluft abwechselnd aus einem Trockenabschnitt absaugen und im folgenden Trockenabschnitt wieder einblasen. Es ist auch möglich, in dem mittleren Luftkanal Drehlüfter in Abständen anzuordnen, die vorzugsweise größer oder kleiner sind als die Länge eines Trocknerwagens.

Im folgenden wird die Erfindung anhand der beiliegenden Zeichnung näher erläutert, in denen

Figur 1    eine Draufsicht auf ein erstes Ausführungsbeispiel der erfindungsgemäßen Vorrichtung zum Trocknen von Keramikformlingen ist,

Figur 2    eine Draufsicht auf ein zweites Ausführungsbeispiel der erfindungsgemäßen Vorrichtung zum Trocknen von Keramikformlingen ist,

Figur 3    eine Querschnittsansicht entlang der Linie II-II der Vorrichtung zum Trocknen von Keramikformlingen von Figur 2 ist,

Figur 4    eine Querschnittsansicht entlang der Linie III-III der Vorrichtung zum Trocknen von Keramikformlingen von Figur 2 ist,

Figur 5    eine Seitenansicht eines Trocknerwagens zur Verwendung in der erfindungsgemäßen Vorrichtung zum Trocknen von Keramikformlingen ist,

Figur 6    eine Vorderansicht des Trocknerwagens von Figur 5 ist, und

Figur 7    eine Querschnittsansicht einer bekannten Vorrichtung zum Trocknen von Keramikformlingen ist.

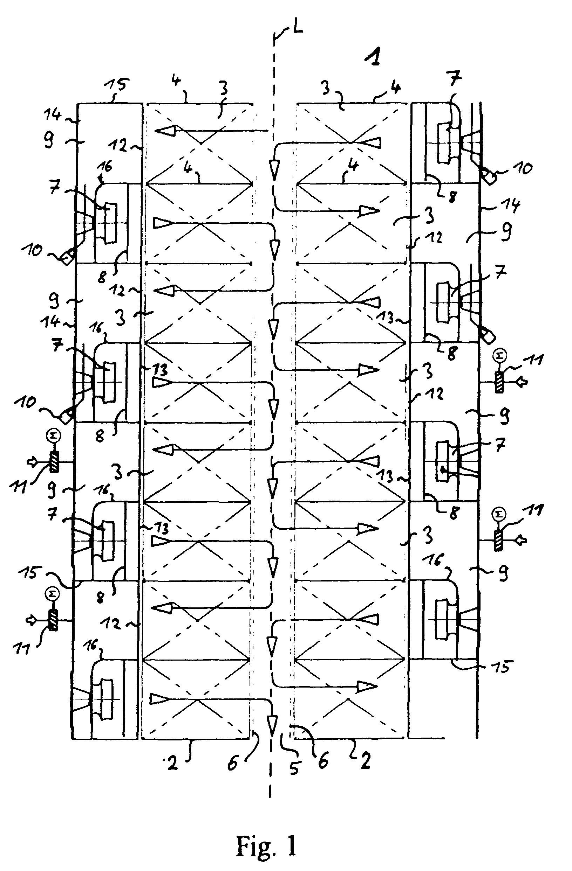

In Fig. 1 ist ein Teil eines ersten Ausführungsbeispiels einer erfindungsgemäßen Vorrichtung 1 zum Trocknen von Keramikformlingen in einer schematischen Draufsicht dargestellt. Zwei parallele Trockenkanäle 2 sind in einem Abstand voneinander angeordnet. Die beiden Trockenkanäle 2 dienen jeweils zum Durchfördern einer Trockenwagenkolonne. Jede Trockenwagenkolonne besteht aus hintereinander angeordneten Trockenwägen 3, auf denen jeweils zu trocknende Keramikformlinge angeordnet sind. Die beiden Wagenkolonnen werden in einer Längsrichtung L durch die beiden Trockenkanäle 2 gefördert. Jeder Trockenwagen 3 ist auf seiner in Förderrichtung vorderen Seite, d. h. in der Fig. 1 oben, beispielsweise durch eine luftundurchlässige Wand 4 abgeschlossen. Die Wände 4 erstrecken sich dabei quer zur Förderrichtung der Trockenwagenkolonne.

Da die beiden Trockenkanäle 2 in einem Abstand und parallel zueinander angeordnet sind, ist zwischen ihnen ein Hauptluftkanal 5 gebildet, der sich über die gesamte Höhe der Vorrichtung 1 zum Trocknen von Keramikformlingen erstreckt. Jeder Trockenkanal 2 ist innen durch eine Wand 6 von dem Hauptluftkanal 5 abgeteilt, wobei die Wand 6 Öffnungen zum Durchlassen von Trockenluft aufweist. Die Wand 6 kann hierfür Schlitze oder eine beliebige andere Perforierung aufweisen.

Der Hauptluftkanal 5 weist eine Längsrichtung L auf, in der Trockenluft durch ihn hindurch gefördert wird. Die Trockenluft durchströmt den Hauptluftkanal 5 dabei in einer Richtung, die der Förderrichtung der Trockenwagenkolonnen in den Trockenkanälen 2 entgegengesetzt ist. Der Hauptluftkanal 5 wird somit an der Ausfahrt der Vorrichtung 1 zum Trocknen von Keramikformlingen mit Heißluft beaufschlagt, wobei an der Einfahrt der Vorrichtung 1 zum Trocknen von Keramikformlingen die Abluft entnommen wird.

An der jeweils vom Hauptluftkanal 5 abgewandten Seite der Trockenkanäle 2 sind Trockenabschnitte 9 angeordnet. Die Trockenabschnitte 9 haben jeweils die Längserstreckung von zwei Trockenwägen 3. An jeder Außenseite der Trockenkanäle 2 sind mehrere Trockenabschnitte 9 in Längsrichtung L hintereinander angeordnet. Jeder Trockenabschnitt 9 weist eine Ventilatoreinrichtung 7 auf, durch die Trockenluft abschnittsweise aus dem Hauptluftkanal 5 durch einen Trockenwagen 3 gesaugt und durch den stromabwärts der Hauptluftstromrichtung angeordneten Trockenwagen 3 wieder in den Hauptluftkanal 5 zurückgeleitet wird. Die Ventilatoreinrichtungen 7 jedes Trockenabschnittes 9 saugen damit Trockenluft aus dem Hauptluftkanal quer durch den jeweiligen Trockenkanal 2, wobei dieser abgezweigte Trockenluftteil parallel dazu quer durch den Trockenkanal 2 stromabwärts wieder in den Hauptluftkanal 5 zurückgeleitet wird. Der Begriff "stromabwärts" bezieht sich dabei auf die Stromrichtung des Hauptluftstromes im Hauptluftkanal 5, also im in Fig. 1 dargestellten Beispiel von oben nach unten.

Wie in Fig. 1 zu erkennen ist, werden die Trockenwägen 3 jeder Trockenwagenkolonne in den beiden Trockenkanälen 2 nacheinander schleifenförmig von Luftstromteilen durchflossen. Die zu trocknenden Keramikformlinge auf den Trockenwägen sind dabei derart angeordnet, daß ihre Öffnungen quer zur Längsrichtung L ausgerichtet sind. Jeder Trockenabschnitt 9 weist eine Eintrittsöffnung 12 auf, durch die der jeweilige Trockenluftteil aus dem Hauptluftkanal angesaugt wird. Durch die Seitenwände 15 und die Rückwand 14 jedes Trockenabschnittes 9 wird im Zusammenwirken mit einer entsprechend gebogenen Zwischenwand 16 der angesaugte Trockenluftteil von der Ventilatoreinrichtung 7 über eine parallel stromabwärts zur Eintrittsöffnung 12 angeordnete Austrittsöffnung 13 wieder in den Hauptluftkanal 5 zurückgeleitet bzw. zurückgeblasen. Im in der Fig. 1 dargestellten Beispiel sind dabei die Ventilatoreinrichtungen 7 jeweils auf der Seite der Austrittsöffnung 13 in jedem Trockenabschnitt 9 angeordnet. Sie können jedoch auch auf der Seite der Lufteintrittsöffnung 12 angeordnet sein. Weiterhin weist jeder Trockenabschnitt 9 kurz vor der Austrittsöffnung 13 eine Luftverteilvorrichtung 8 auf, die eine gleichmäßige Verteilung des Trockenluftteiles in dem entsprechenden Trockenwagen 3 senkrecht zur Förderrichtung gewährleistet. Die luftundurchlässigen Vorderwände 4 der Trockenwägen 3 stellen dabei sicher, daß die angesaugten und zurückgeleiteten Trockenluftteile sich nicht vermischen, sondern sauber durch die jeweiligen Trockenwägen 3 und die darauf bzw. darin liegenden zu trocknenden Keramikformlinge geleitet werden.

Wie in der Fig. 1 zu erkennen ist, sind die Trockenabschnitte 9 der einen Seite versetzt zu den Trockenabschnitten 9 der anderen Seite angeordnet. Die Versetzung beträgt dabei eine Trockenwagen-Länge. Hierdurch wird gewährleistet, daß in dem Hauptluftkanal 5 keine entgegengesetzt gerichteten Teilluftströme aufeinander treffen. Drei der in der Fig. 1 dargestellten Trockenabschnitte weisen eine Heizeinrichtung 10 in Form eines Zusatzbrenners auf, durch die der durch diese Trockenabschnitte 9 geleitete Trockenluftteil zusätzlich erwärmt werden kann. Die Anzahl der Trockenabschnitte 9, die mit Heizeinrichtungen 10 ausgestattet werden, ist dabei beliebig an die jeweiligen Erfordernisse anpaßbar. Weiterhin weisen vier der in der Fig. 1 dargestellten Trockenabschnitte 9 einen Frischlufteinlaß 11 auf, durch den der jeweilige Trockenluftteil in dem jeweiligen Trockenabschnitt 9 abgekühlt werden kann. Auch die Anzahl der Trockenabschnitte 9, die mit einem Frischlufteinlaß 11 versehen werden, ist beliebig an die Erfordernisse anpaßbar. Vorteilhafterweise sind dabei die Heizeinrichtungen 10 und auch die Frischlufteinlässe 11 jeweils unabhängig voneinander einstellbar, so daß die Temperatur der Trockenluft in der erfindungsgemäßen Vorrichtung zum Trocknen von Keramikformlingen beliebig verändert werden kann.

Weiterhin ist die Leistung der Ventilatoreinrichtung 7 der Trockenabschnitte 9 unabhängig voneinander einstellbar, beispielsweise über eine jeweils unabhängige Drehzahlregelung. Durch die Regelung der Drehzahl der Ventilatoreinrichtungen 7 kann der Wärmeübergang bzw. der Stoffübergang an den Oberflächen der zu trocknenden Keramikformlinge mittels der Veränderung der Luftgeschwindigkeit der Trockenluftteile gesteuert werden.

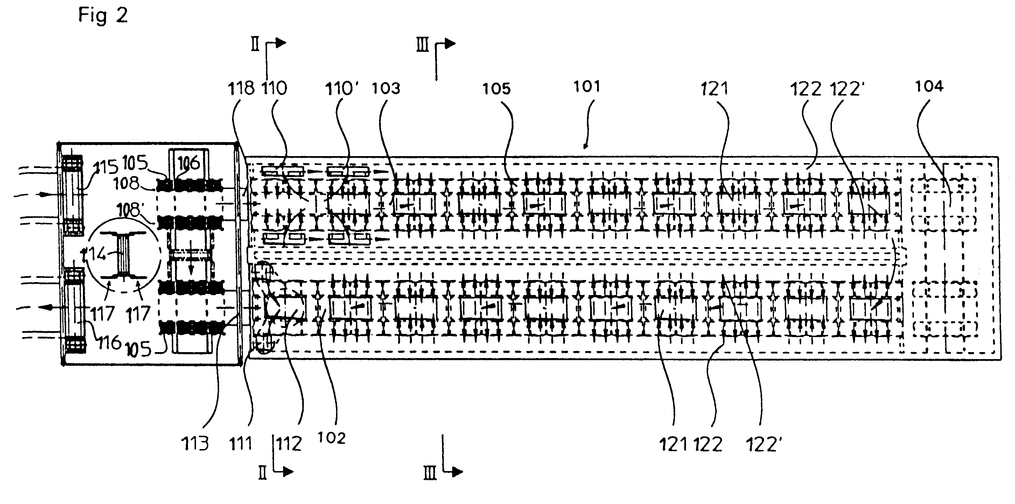

Figur 2 zeigt ein zweites Ausführungsbeispiel einer erfindungsgemäßen Trocknervorrichtung 101, die einen U-förmigen Trockenkanal, bestehend aus einem Vorlaufkanal 102 und einem Rücklaufkanal 103 und einen die beiden verbindende Umsetzvorrichtung 104 aufweist. Mit nassen Formlingen 106 befüllte Trocknerwagen 105 werden an der Einfahrseite 113 in den Vorlaufkanal 102 des Trockners eingeschoben. Sie werden dann kontinuierlich bis zu der Umsetzvorrichtung 104 weitergefördert, dort in den Rücklaufkanal 103 umgesetzt und an der Ausfahrseite 118 dem Trockner 101 wieder entnommen.

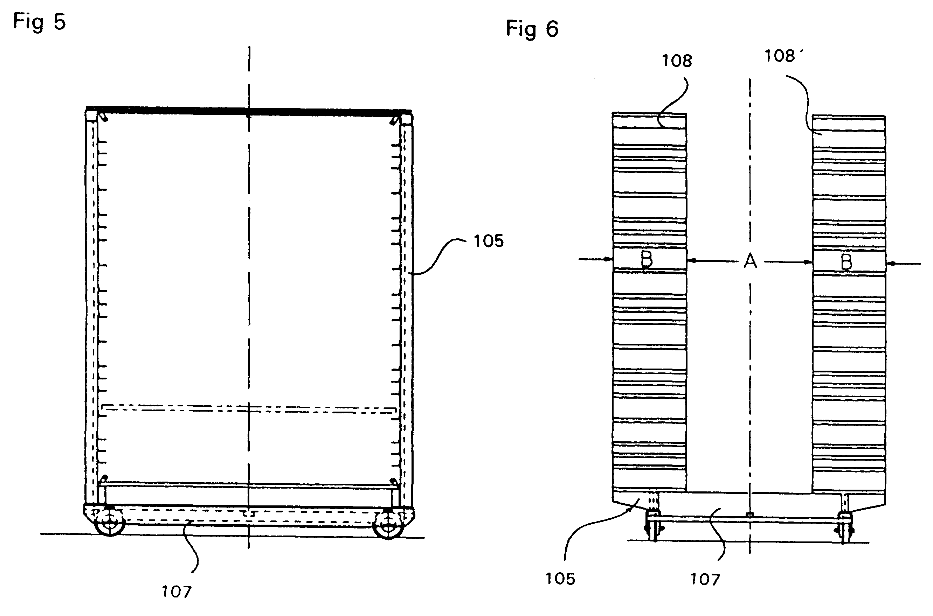

Die Keramikformlinge liegen so auf dem Trocknerwagen 106, daß sie zwei mit einem Abstand A voneinander angeordnete Reihen bilden (siehe Figur 6). Die Besatztiefe B jeder Formlingsreihe beträgt vorzugsweise nur ein oder zwei Formlinge, so daß eine gleichmäßige und schnelle Trocknung sichergestellt ist. Die beiden voneinander beabstandeten Trocknerwagengerüste 108, 108', auf denen die Formlinge 106 liegen, sind an einem gemeinsamen Grundrahmen 107 montiert.

Die beiden voneinander beabstandeten und mit Formlingen 106 beladenen Trocknerwagengerüste 108, 108' aufeinanderfolgender Trocknerwagen 106 bilden in dem Trockentunnel zwei parallele Formlingsreihen. Wie am besten in den Figuren 3 und 4 zu sehen ist, sind zwischen diesen Formlingsreihen ein mittlerer Luftkanal 121 und außerhalb der Formlingsreihen äußere Luftkanäle 122 gebildet. In diesen Luftkanälen 121, 122 wird insgesamt eine der Bewegungsrichtung der Trocknerwagen 106 entgegengesetzte Luftströmung aufrechterhalten, wobei die Trocknerluft im Bereich der Umsetzvorrichtung 104 so umgeleitet wird, daß diese selbst nicht mit der Trockenluft beaufschlagt ist. Wie in Figur 3 gezeigt ist, wird die Trockenluft durch Heißlufteinspeisungen 110, 110' an der Ausfahrseite 118 des Rücklaufkanals in die äußeren Luftkanäle 122 eingespeist und durch die beiden Formlingsreihen hindurch dem mittleren Trockenkanal 121 zugeführt. Mittels eines an der Decke des Trockenkanals angeordneten Ventilators wird die Trockenluft dem mittleren Luftkanal 121 entnommen und im nächsten Trockenabschnitt, der mit der Position des vorangehenden Trockenwagens übereinstimmt, wieder in den mittleren Kanal 121 eingeblasen. Es sei angemerkt, daß ein Trockenabschnitt auch der Länge von zwei oder mehreren Trockenwagen entsprechen kann. Die Trockenluft strömt dann durch den Formlingsabsatz hindurch in die äußeren Luftkanäle 122 (Figur 2 und Figur 4 links), wo sie zum nächsten Trockenabschnitt gelangt und dort nach erneutem Durchströmen der Formlingsreihe, diesmal von außen nach innen (Figur 4 rechts), von einem weiteren Ventilator im mittleren Luftkanal 121 wieder angesaugt wird. So wird der kontinuierlichen Gegenstrom-Trockenluftströmung eine meanderförmige Querströmung überlagert, die für eine gleichmäßige Umströmung und damit Trocknung der Formlinge sorgt. Das Einblasen bzw. Absaugen der Trockenluft in jeden Trockenabschnitt erfolgt immer am mittleren Luftkanal 121, wodurch die meanderförmige Luftströmung mit einer geringen Anzahl von Ventilatoren, nämlich einem Ventilator je Trockenabschnitt, unabhängig von der Höhe der Trocknerwagengerüste 108, 108' aufrechterhalten wird. Dadurch verbessert sich die Energieeffizienz des Trockners.

Zum Be- und Entladen der Trocknerwagen 105 ist eine Lade-/Entladevorrichtung 114 mit beidseitig angeordneten Rechen 117, 117' zum Aufgreifen, Transportieren und Absetzen der nassen bzw. getrockneten Keramikformlinge 106 vorgesehen. Wie in Figur 2 schematisch dargestellt ist, verfährt die Lade-/Entladevorrichtung zwischen einem Naßgerüst 116 zur Bereitstellung von Naßformlingen, einem an der Einfahrseite positionierten Trocknerwagen, einem an der Ausfahrseite angeordneten Trocknerwagen und einem Trockengerüst 115 zur Aufnahme von getrockneten Formlingen. Die beidseitig angeordneten Rechen 117, 117' erlauben dabei ein sehr effizientes Be- und Entladen der Trocknerwagen mit wenigen Bewegungen. Sobald ein Trocknerwagen an der Ausfahrseite 118 des Trockners entleert ist, wird dieser zur Einfahrseite 113 verfahren und mit neuen nassen Formlingen beladen. Gleichzeitig erreicht ein neuer, mit getrockneten Formlingen beladener Trocknerwagen die Entladeposition. So wird auf einfache Weise ein kontinuierlicher Trocknerbetrieb mit schnellem Durchsatz ermöglicht.

Das zweite Ausführungsbeispiel der erfindungsgemäßen Vorrichtung und des erfindungsgemäßen Verfahrens zum Trocknen von Keramikformlingen ermöglicht eine gleichmäßige und schnelle Trocknung der Formlinge mit einer geringstmöglichen Anzahl von Ventilatoren und daher geringem Energieeinsatz. Eine U-förmige Anordnung des Trockenkanals ermöglicht eine effiziente Beschickung mit und Entnahme der Formlinge.

**Patentansprüche**

1. Vorrichtung zum Trocknen von Keramikformlingen, mit

   zwei parallelen Trockenkanälen (2) zum Durchfördern von mit zu trocknenden Keramikformlingen beladenen Trockenwägen (3) in einer Längsrichtung L,
   einem zwischen den beiden Trockenkanälen (2) angeordneten Hauptluftkanal (5) zum Durchströmen von Trockenluft, und
   Trockenabschnitten (9), die auf den von dem Hauptluftkanal (5) abgewandten Seiten der Trockenkanäle (2) angeordnet sind, wobei jeder Trockenabschnitt (9) eine Ventilatoreinrichtung (7) umfaßt, die einen Trockenluftteil quer durch den jeweiligen Trockenkanal (2) aus dem Hauptluftkanal (5) ansaugt und den Trockenluftteil quer durch den Trockenkanal (2) stromabwärts in den Hauptluftkanal (5) zurückleitet.

2. Vorrichtung zum Trocknen von Keramikformlingen gemäß Anspruch 1,
   **dadurch gekennzeichnet, daß**
   die Trockenabschnitte (9) des einen Trockenkanales (2) in der Längsrichtung L versetzt zu den Trockenabschnitten (9) des anderen Trockenkanales (2) angeordnet sind.

3. Vorrichtung zum Trocknen von Keramikformlingen gemäß einem der vorhergehenden Ansprüche,
   **dadurch gekennzeichnet, daß**
   zwischen dem Hauptluftkanal (5) und den beiden Trockenkanälen (2) jeweils eine Wand (6) mit Öffnungen zum Durchlassen von Trockenluft angeordnet ist.

4. Vorrichtung zum Trocknen von Keramikformlingen gemäß einem der vorhergehenden Ansprüche,
   **dadurch gekennzeichnet, daß**
   zumindest ein Trockenabschnitt (9) eine Heizeinrichtung (11) zum Erhitzen seines Trockenluftteils umfaßt.

5. Vorrichtung zum Trocknen von Keramikformlingen gemäß einem der vorhergehenden Ansprüche,
   **dadurch gekennzeichnet, daß**
   zumindest ein Trockenabschnitt (9) einen Einlaß (10) zur Zufuhr von Frischluft zu seinem Trockenluftteil aufweist.

6. Vorrichtung zum Trocknen von Keramikformlingen gemäß einem der vorhergehenden Ansprüche,
   **dadurch gekennzeichnet, daß**
   die Ventilationsleistungen der Ventilatoreinrichtungen (7) unabhängig voneinander einstellbar sind.

7. Vorrichtung zum Trocknen von Keramikformlingen gemäß einem der vorhergehenden Ansprüche,
   **dadurch gekennzeichnet, daß**
   jeder Trockenabschnitt (9) sich über die Lange von zwei Trockenwägen (3) erstreckt.

8. Verfahren zum Trocknen von Keramikformlingen, die auf in zwei parallelen Kolonnen angeordneten Trockenwägen (3) angeordnet sind, mit den Schritten

   Durchströmen von Trockenluft durch einen Hauptluftkanal (5) zwischen den Kolonnen von Trockenwägen (3),
   Ansaugen von Trockenluftteilen aus dem Hauptluftkanal (5) quer durch die jeweiligen Trockenwägen (3), und
   Zurückleiten der Trockenluftteile quer durch den jeweils stromabwärts angeordneten Trockenwagen (3) in den Hauptluftkanal (5), wobei das Ansaugen und das Zurückleiten der Trockenluftteile in Trockenabschnitten (9) erfolgt, die auf den dem Hauptluftkanal (5) abgewandten Seiten der Kolonnen von Trockenwägen (3) angeordnet sind.

9. Verfahren nach Anspruch 8, **dadurch gekennzeichnet, daß** die Strömungsgeschwindigkeiten der jeweiligen Trockenluftteile in den einzelnen Trockenabschnitten (9) unabhängig voneinander einstellbar sind.

10. Vorrichtung zum Trocknen von Keramikformlingen mit

   einem Trockenkanal (102, 103) zum Durchfördern der zu trocknenden Keramikformlinge (106) in zwei voneinander beabstandeten Reihen, die einen mittleren (121) sowie zwei äußere (122) Luftkanäle freilassen und
   einer Ventilationseinrichtung zur Führung der Trockenluft durch den Trockenkanal (102, 103) entgegen der Förderrichtung des Trockenguts, wobei ein Trockenluftanteil in hintereinander angeordneten Trockenabschnitten abwechselnd in den mittleren Luftkanal (121) eingeblasen wird und die Keramikformlingsreihen zu den äußeren Luftkanälen (122) durchströmt und im folgenden Trockenabschnitt die Keramikformlingsreihen von den äußeren (122) zu dem mittleren (121) Lufkanal durchströmt und vom mittleren Luftkanal (121) abgesaugt wird.

11. Vorrichtung nach Anspruch 10, **gekennzeichnet durch** Trockenwagen (105) mit jeweils zwei voneinander beabstandeten Trockengerüsten (108, 108') zur Aufnahme der zu trocknenden Keramikformlinge (106).

12. Vorrichtung nach Anspruch 10 oder 11, **dadurch gekennzeichnet,** daß die Keramikformlingsreihen eine Breite von höchstens zwei Formlingen (106) haben.

13. Vorrichtung nach einem der Ansprüche 10 bis 12, **dadurch gekennzeichnet,** daß der Trockenkanal U-förmig mit einem Vorlaufkanal (102) und einem Rücklaufkanal (103) ausgebildet ist, so daß eine Einfahrseite (113) und eine Ausfahrseite (118) des Trockenkanals nebeneinander angeordnet sind.

14. Vorrichtung nach Anspruch 13, **gekennzeichnet durch** eine Lade-/Entladevorrichtung (114) zum Beladen der Trocknerwagen (105) an der Einfahrseite (113) und zum Entladen der Trocknerwagen (105) an der Ausfahrseite (118) des Trockenkanals.

15. Vorrichtung nach Anspruch 14, **gekennzeichnet durch** ein Naßgerüst (116) zur Bereitstellung von zu trocknenden Keramikformlingen (106) sowie ein Trockengerüst (115) zur Aufnahme von getrockneten Keramikformlingen.

16. Vorrichtung nach Anspruch 14 oder 15, **dadurch gekennzeichnet,** daß die Lade-/Entladevorrichtung (114) beidseitig angeordnete Rechen (117, 117') zum Aufgreifen, Transportieren und Absetzen von zu trocknenden bzw. getrockneten Keramikformlingen (106) aufweist.

17. Vorrichtung nach einem der Ansprüche 14 bis 16, sofern auf Anspruch 10 rückbezogen, **gekennzeichnet durch** eine Umsetzbühne (104) zum Umsetzen der Trocknerwagen (105) vom Vorlaufkanal (102) zum Rücklaufkanal (103), welche Umsetzbühne (104) nicht von der Trockenluft durchströmt wird.

18. Vorrichtung nach einem der Ansprüche 10 bis 17, **dadurch gekennzeichnet,** daß an der Einfahrseite (113) des Trockenkanals eine mittlere Trockenluftabsaugung (112) über dem mittleren Luftkanal (121) sowie äußere Trockenluftabsaugungen (111) an den seitlichen Luftkanälen (122) angeordnet sind.

19. Vorrichtung nach Anspruch 18, **dadurch gekenn-**

**zeichnet,** daß der Luftdurchsatz der Trockenluftabsaugungen (111, 112) zur Regulierung der Luftverteilung im Querschnitt des Trockenkanals einzeln regelbar ist.

20. Vorrichtung nach einem der Ansprüche 10 bis 19, **dadurch gekennzeichnet,** daß an der Ausfahrseite (118) des Rücklaufkanals (103) Heißlufteinspeisungen (110, 110') zu den seitlichen Luftkanälen (122) angeordnet sind.

21. Vorrichtung nach einem der Ansprüche 10 bis 20, **dadurch gekennzeichnet,** daß die Ventilationseinrichtung oberhalb des Trockenkanals (102, 103) angeordnete Ventilatoren umfaßt.

22. Vorrichtung nach Anspruch 21, **dadurch gekennzeichnet,** daß für jeden Trockenabschnitt ein Ventilator vorgesehen ist.

23. Vorrichtung nach Anspruch 21 oder 22, **dadurch gekennzeichnet,** daß die Einblasventilatoren als Drehlüfter (119) ausgebildet sind.

24. Verfahren zum Trocknen von Keramikformlingen, wobei

die zu trocknende Keramikformlinge (106) in zwei voneinander beabstandeten Reihen durch einen Trockenkanal (102, 103) gefördert werden, so daß ein mittlerer (121) sowie zwei äußere (122) Luftkanäle freigehalten sind, und Trockenluft entgegen der Förderrichtung der Keramikformlinge durch den Trockenkanal (102, 103) geleitet wird, wobei ein Trockenluftanteil nacheinander abwechselnd in den mittleren Luftkanal (121) eingeblasen wird und die Keramikformlingsreihen zu den äußeren Luftkanälen (122) durchströmt und anschließend in einem benachbarten Trockenabschnitt die Keramikformlingsreihen von den äußeren Luftkanälen (122) zu dem mittleren Luftkanal (121) durchströmt und aus diesem abgesaugt wird.

25. Verfahren nach Anspruch 24, **dadurch gekennzeichnet,** daß die Luftverteilung im Querschnitt des Trockenkanals durch voneinander unabhängige Steuerung des Luftdurchsatzes der Trockenluftabsaugungen aus dem mittleren und den seitlichen Luftkanälen (121,122) regelbar ist.

Fig. 1

Fig 2

Fig 3

Fig 4

Fig 5

Fig 6

Fig 7

Stand der Technik

106

109